# EUROPÄISCHE PATENTSCHRIFT

(11) **EP 2 893 817 B1**
(45) Veröffentlichungstag und Bekanntmachung des Hinweises auf die Patenterteilung: **19.07.2017**
(21) Anmeldenummer: 14150715.2
(22) Anmeldetag: 10.01.2014
(51) Int. Cl.: A23L 5/20, A23L 2/38, B01D 61/02, C12H 3/04, B01D 15/10

(54) **Vorrichtung und Verfahren zur Herstellung eines entalkoholisierten Getränks**
Device and method for producing of a de-alcoholised beverage
Dispositif et procédé de fabrication d'une boisson désalcoolisée

(43) Veröffentlichungstag der Anmeldung: 15.07.2015
(73) Patentinhaber: Wia Wine AG, 9442 Berneck (CH)
(72) Erfinder: Thurnheer, Alfred, 9442 Berneck (CH)
(74) Vertreter: Allwardt, Anke

(56) Entgegenhaltungen:
- WO-A1-89/01965
- US-A- 5 308 631
- US-A1- 2008 272 041
- US-B1- 6 472 009
- BOGIANCHINI M ET AL: "Stability, antioxidant activity and phenolic composition of commercial and reverse osmosis obtained dealcoholised wines", LWT- FOOD SCIENCE AND TECHNOLOGY, ACADEMIC PRESS, UNITED KINGDOM, Bd. 44, Nr. 6, 31. Januar 2011 (2011-01-31), Seiten 1369-1375, XP028369994, ISSN: 0023-6438, DOI: 10.1016/J.LWT.2011.01.030 [gefunden am 2011-02-09]
- KARLSSON H: "Aroma recovering during beverage processing", JOURNAL OF FOOD ENGINEERING, BARKING, ESSEX, GB, Bd. 34, Nr. 2, 1997, Seiten 159-178, XP002112611, ISSN: 0260-8774, DOI: 10.1016/S0260-8774(97)00081-2

## Beschreibung

Die Anmeldung bezieht sich auf eine Vorrichtung und ein Verfahren zur Herstellung eines entalkoholisierten Getränks, wobei unter einer Entalkoholisierung - oder synonym auch als Dealkoholisierung bezeichnet - jede Reduzierung des Alkoholgehalts eines Getränks bis hin zu einer gänzlichen Entfernung des Alkohols verstanden wird. Unter Alkohol wird im Weiteren Ethanol verstanden.

Prinzipiell kann zwischen zwei Verfahren zur De- oder Entalkoholisierung unterschieden werden, wobei auch Kombinationen dieser beiden Verfahren bekannt sind. Bei dem einen Verfahren wird ein geringer Alkoholgehalt dadurch erreicht, dass die Gärung vorzeitig gestoppt wird, also die Alkoholentstehung verhindert oder verringert wird. Dadurch erhält das Getränk in der Regel einen süßlichen Geschmack, da viele Kohlenhydrate noch in ihrer ursprünglichen Form vorliegen. Aromen, die sich erst bei der Gärung entwickeln fehlen hingegen. Bei dem anderen Verfahren wird nach abgeschlossenem Gärprozess der Alkohol in einem nachgeschalteten physikalischen Prozess aus dem Getränk entfernt, wobei zusammen mit dem Alkohol auch viele Aromastoffe entfernt werden bzw. durch den Prozess (Wärme, Luftsauerstoff) Aromastoffe verändert werden. Nachteilig bei beiden Verfahren ist somit die starke geschmackliche Veränderung des Getränks.

Unter dem Verfahren des zweiten Typs gibt es verschiedene technische, in der Regel thermische Verfahren, mit deren Hilfe derzeit alkoholarme (>0.5% Vol) oder sogenannte alkoholfreie Getränke (<0.5% Vol) hergestellt werden, wobei gleichzeitig das Aroma konzentriert wird.

Das bekannteste dieser Verfahren zur Entfernung von Alkohol aus Getränken ist sicher die Destillation bzw. die Rektifikation. Ebenfalls bekannt sind die Extraktion mit Flüssigkeiten, mit komprimierten oder mit überkritischen Gasen sowie die Umkehrosmose und die Dialyse.

Beim geläufigsten Verfahren, der fraktionierten Destillation, wird dem alkoholischen Getränk unter Vakuum der Alkohol in einer Destillationskolonne als Mittelfraktion entzogen. Die leichtflüchtigen Aromen werden bevorzugt in der Kopffraktion, auch Vorlauf genannt, und die schwerflüchtigen Aromen im Schlempenwasser angereichert. Der Alkohol wird mit der Mittelfraktion abgeschieden. Die Kopffraktion und das Schlempenwasser werden als Aromenbestandteile in der Ausmischung wieder dem entalkoholisierten Getränk zugegeben. Bei der Ausmischung werden in der Regel noch gewisse gestattete Zusätze und Schönungsmittel zur Geschmackskorrektur zugegeben. Dieses Verfahren hat zwei wesentliche Nachteile: Erstens ist die Aromenrückgewinnung aus physikalischen Gründen nur unvollständig (Azeotropien von Aromabestandteilen mit Alkohol, Verluste von leicht flüchtigen Kopfnoten über das Vakuumpumpensystem). Zweitens wird das alkoholische Getränk als Ganzes einem thermischen Prozess unterworfen, was trotz der Prozess-Temperaturerniedrigung durch die Verwendung eines Vakuums zu nachteiligen Geschmacksveränderungen des Getränks führt. Eine Wiederherstellung der typischen Geschmacks- und Geruchskomponenten des alkoholischen Ausgangsprodukts ist so nicht möglich.

Das Spinning-Cone Verfahren ist von seinem Prinzip her ebenfalls ein fraktioniertes Destillationsverfahren, jedoch wird bauartbedingt sowohl die thermische Belastung des alkoholischen Getränkes reduziert, als auch die Aromenrückgewinnung in den Kopfnoten verbessert. In Bezug auf die sensorische Qualität (Geschmack und Bukett) hat dieses Verfahren die entalkoholisierten Getränke gegenüber solchen gewonnen mittels herkömmlicher fraktionierter Destillation signifikant verbessert.

Unabhängig vom gewählten Verfahren muss aber dennoch festgestellt werden, dass bis heute Getränke, bei denen der Alkohol nachträglich entfernt wurde, geschmacklich nicht mit den alkoholischen Ausgangsprodukten mithalten können, da, wie oben bereits kurz angesprochen, mit der Entfernung des Alkohols auch viele Aromastoffe, vor allem leichtflüchtige Aromastoffe entfernt werden. Bei einer Entfernung des Alkohols bei erhöhten Temperaturen werden ausserdem Oxidationsprozesse und andere chemische Reaktionen in Gang gesetzt oder beschleunigt, die eine weitere Veränderung des Geschmacks mit sich bringen. Unter erhöhten Temperaturen werden hierbei Temperaturen des Getränkes von mehr als 30°C verstanden, da sich ab diesen Temperaturen, abhängig vom Getränk, der Behandlungsdauer und den physikalischchemischen Prozessen die Zusammensetzung des Getränkes signifikant verändern kann. Auch die Haltbarkeit und die Farbe des Getränks können durch diese Verfahren beeinträchtigt werden.

Um diese Nachteile auszugleichen werden auf diese Weise gewonnene, alkoholfreie oder alkoholreduzierte Getränke-Zwischenprodukte mit Chargen des nicht-entalkoholisierten Getränke-Ausgangsprodukts verschnitten, wodurch der Alkoholgehalt des Endproduktes wieder steigt. Oder aber es werden dem Getränke-Zwischenprodukt Zusatzstoffe zugemischt, die über die Geschmacksveränderung hinwegtäuschen sollen, was aber in der Regel nicht zu den gewünschten Resultaten führt.

Im Folgenden werden Beispiele für verschiedene solcher bekannter Verfahren dargelegt:
WO98/01965 offenbart ein Verfahren, bei dem eine alkoholhaltige Ausgangsflüssigkeit einer Querstrom-Membrantrenneinrichtung zugeführt wird, in der das aus Wasser, Alkohol und flüchtigen Stoffen bestehende Permeat durch erhöhten Transmembrandruck und Konzentrationsdifferenz abgetrennt wird. Anschliessend wird aus dem alkoholhaltigen Permeat durch Destillation der Alkohol herausdestilliert. Das nur noch aus Wasser, Salzen, Säuren und Extrakten bestehende Permeat wird in die Querstrom-Membrantrenneinrichtung zurückgeführt, wo es die Permeatseite im Gegenstrom zum Retentatfluss durchströmt. Überschüssiges Permeat kann in die entalkoholisierte Ausgangsflüssigkeit eingeleitet werden.

US 5308631 offenbart beispielsweise ein Verfahren zum entalkoholisieren von Bier, mit den folgenden Schritten: In Kontaktbringen von alkoholhaltigem Bier mit einem hydrophobischen Gerüstsilikat (Zeolith), Abtrennen des flüssigen Eulents vom Adsorbent, thermische Desorption der adsorbierten Produkte, Rückgewinnung der desorbierten Phase und Trennen derselben durch Destillation in eine alkoholhaltige und eine aromahaltige Phase, Zusammenmischen der entalkoholisierten wässrigen Phase und der aromahaltigen Phase zur Herstellung eines alkoholfreien Biers, und Sättigen des alkoholfreien Biers mit gasförmigen CO₂.

In US2008/0272041 ist ein Verfahren dargstellt bei dem der Alkoholgehalt von alkoholhaltigen Getränken reduziert wird, welche auch leicht flüchtige Stoffe enthalten, und das folgende Schritte umfasst: Aufteilen des Getränks in einen ersten und einen zweiten Strom, wobei der erste Strom Alkohol und leicht flüchtige Stoffe und der zweite Strom primär Alkohol aber nur wenige oder gar keine leicht flüchtigen Stoffe umfasst; Strippung des zweiten Stroms, so dass der gestrippte zweite Strom eine reduzierte Alkoholkonzentration aufweist; Mischen des ersten Stroms mit dem gestrippten zweiten Strom zu einem Getränk mit reduziertem Alkoholgehalt aber kaum reduzierten Gehalt an leicht flüchtigen Stoffen.

Verschiedentlich sind nun Verfahren vorgeschlagen worden, die durch Reduktion des Druckes oder durch weitgehenden Ausschluss von Sauerstoff während der Dealkoholisierung diesen Effekten entgegenzuwirken versuchen, Beispiele für solche Verfahren sind z.B. in der DE 35 06 820 A1 und der DE 10 2010 031 729 A1 beschrieben.

DE 35 06 820 A1 erläutert ein Verfahren, bei dem Schaumwein dealkoholisiert wird. Hierzu wird dem Schaumwein in einem geschlossenen System durch Versprühen bei geringen Drücken (400-500 mm Hg) zunächst die Kohlensäure entzogen, dann wird bei noch geringeren Drücken (80-120 mm Hg) und einer Temperatur von 30°C bis 45°C eine Vakuumdestillation durchgeführt und so der Alkohol entfernt, und anschliessend wird bei 3 bis 4 bar Überdruck und Temperaturen von 3°C bis 8°C die Kohlensäure wieder zugeführt. Der auf diese Weise entalkoholisierte Schaumwein soll weniger als 0.5vol% Alkohol enthalten.

Ein Beispiel für eine Dealkoholisierung mittels Gas zeigt DE 10 2010 031 729 A1. Bei dem hier dargestellten Verfahren, wird während des Prozesses Ethanol aus dem Getränk in das Gas desorbiert, welches danach abgeführt und gegebenenfalls weiteren Schritten unterzogen wird. Um die hierfür üblicherweise benötigten grossen Mengen an Gas zu reduzieren schlägt die DE 10 2010 031 729 A1 vor das Verfahren bei reduziertem Umgebungsdruck durchzuführen. Als weiteren Effekt beschreibt die DE 10 2010 031 729 A1, dass unter diesen Bedingungen als Gas auch Inertgas verwendet werden kann, was die sonst auftretenden Geschmacksveränderungen aufgrund von Oxidationsprozessen verhindern soll. Die Anpassung des Umgebungsdrucks muss bei diesem Verfahren gesteuert erfolgen, wobei eine Druckreduktion während der Entalkoholisierung insbesondere in Abhängigkeit vom sich einstellenden Siedepunkt des zu entalkoholisierenden Getränks geregelt wird, d.h. der Druck wird mit fortschreitender Entalkoholisierung reduziert.

WO 2004/113489 A1 stellt ein Verfahren vor, bei dem der Alkohol ebenfalls mittels eines Destillationsprozesses aus dem Getränk entfernt wird. Vor dem Schritt der Alkoholentfernung wird das Getränk aber durch einen Permeationsprozess in eine alkoholfreie Phase, die reich an Aromastoffen ist, und eine alkoholhaltige Phase getrennt. Die alkoholhaltige Phase wird mittels Destillation entalkoholisiert und anschliessend mit der alkoholfreien und aromahaltigen Phase rekombiniert.

Trotz der beschriebenen Massnahmen gehen bei den erläuterten Verfahren immer noch viele Aromastoffe, vor allem bei der Alkoholentfernung, verloren.

Die hier beschriebene Erfindung will eine verbesserte Vorrichtung und ein verbessertes Verfahren zur Herstellung von entalkoholisierten Getränken, und insbesondere von entalkoholisiertem Wein zur Verfügung stellen, bei dem noch mehr der ursprünglichen Aromastoffe erhalten bleiben. Dabei wird im Folgenden von entalkoholisierten Getränken gesprochen unabhängig davon ob sie alkoholarm (>0.5% Vol) oder alkoholfrei (<0.5% Vol) sind. Wird im Folgenden von "alkoholfrei" gesprochen, so ist dies als "weitestgehend alkoholfrei" zu verstehen, das heisst es können noch Restmengen Alkohol von bis zu etwa 0.5 Volumenprozent enthalten sein.

Ein verbessertes Verfahren zur Herstellung von entalkoholisierten Getränken, bei dem insbesondere mehr der ursprünglichen Aromastoffe erhalten bleiben, ist in Anspruch 1 angegeben und eine Anlage zur Durchführung eines solchen Verfahrens in Anspruch 14. Fortbildungen des Verfahrens bzw. der Anlage sind in den abhängigen Ansprüchen angegeben.

Das Verfahren zur Herstellung von entalkoholisierten Getränken umfasst folgende Schritte: Eine Auftrennung des Getränke-Ausgangsprodukts mittels nicht-thermischer Permeation in ein alkoholhaltiges und aromahaltiges Permeat einerseits und in ein aromahaltiges und alkoholfreies Retentat andererseits sowie eine Entalkoholisierung des Permeats, vorzugsweise mittels Destillation und ein Zusammenführen des entalkoholisierten Permeats mit dem nahezu alkoholfreien Retentat. Des Weiteren werden bei dem erfindungsgemässen Verfahren dem aroma- und alkoholhaltigen Permeat vor dem Entzug des Alkohols bzw. vor der Destillation seine Aromastoffe entzogen. Dies erfolgt vorzugsweise in einem Aromenadsorber. Durch den Entzug der Aromastoffe erhält man einerseits ein weitestgehend entaromatisiertes aber alkoholhaltiges Permeat, dem anschliessend der Alkohol entzogen wird, so dass eine entaromatisierte, entalkoholisierte Permeat-Wasserphase resultiert. Andererseits erhält man die adsorbierten Aromen in Form einer Aromaphase. Diese Aromaphase wird mit der Permeat-Wasserphase und dem Retentat zusammengeführt und zum entalkoholisierten Getränke-Endprodukt ausgemischt.

Als Ausgangsprodukt können Wein, Schaumwein, Bier oder Schnaps oder ein beliebiges anderes alkoholhaltiges Getränk verwendet werden, welches entalkoholisiert werden soll.

Hauptaufgabe der Permeation ist die Abtrennung des Alkohols. Die nicht-thermische Permeation wird mit Hilfe einer Nanofiltermembran (auch einfach nur Membran oder Nanofilter genannt) durchgeführt. Auf der Filtratseite entsteht bei Permeation das sogenannte Permeat; so wird bei der Nano-Filtration das Filtrat genannt. Dabei gehen aus physikalischen und chemischen Gründen auch Teile des im alkoholischen Getränk befindlichen Wassers, Aromen und wasserlösliche Fruchtbestandteile in das Permeat über. Die Extraktkomponente des alkoholischen Getränkes wird durch das oben genannte nicht-thermische Permeationsverfahren mit seinen wertgebenden Substanzen erhalten, und als eigene Komponente für eine Rekonstitution separiert. Diese Extraktkomponente wird "Retentat" genannt. Die Rekonstitution (auch Rekonstruktion genannt) erfolgt durch Ausmischung mit weiteren Komponenten in einem Ausmischungsmodul.

Die Auftrennung des alkoholischen Getränks in ein alkoholhaltiges und aromahaltiges Permeat einerseits und ein aromahaltiges und nahezu alkoholfreies Retentat andererseits erfolgt mittels der nicht-thermischen Permeation unter erhöhtem Druck, wobei der Druck beispielsweise in einem Bereich von 10bar bis 50bar und insbesondere in einem Bereich von 20bar bis 40 bar liegt. Bei der nicht-thermischen Permeation wird eine Membran bzw. ein Nanofilter (auch Nanofiltermembran genannt) als Trennmittel eingesetzt, welches das Retentat zurückhält, jedoch durchlässig ist für das Permeat. Die Membran bzw. der Nanofilter wird abhängig von den Eigenschaften des alkoholhaltigen Getränke-Ausgangsprodukts und der gewünschten Zusammensetzung von Permeat und Retentat gewählt. Abhängig von den Eigenschaften der gewählten Nanofiltermembran und der gewünschten Zusammensetzung von Permeat und Retentat werden der Druck und die Temperatur gewählt, mit welchem das Getränk-Ausgangsprodukt über die Nanofiltermembran geführt wird.

Es werden laufend neue Membranen bzw. Nanofilter entwickelt, welche veränderte Eigenschaften gegenüber den heute bekannten Eigenschaften aufweisen. Entsprechend der neuen Eigenschaften dieser neu entwickelten Membranen können sich auch die anzuwendenden Drücke und Temperaturen ändern.

Allgemein kann gesagt werden, dass die Nanofiltermembran grössere Moleküle wie Farbstoffe und Extraktstoffe aber auch gewisse Aromenbestandteile, welche je nach verwendetem Membranmaterial variieren, im Retentat zurückbehält. Somit setzen sich die Retentat-Aromen beispielsweise aus eher grossen Molekülen zusammen, welche entweder polar sind, oder die Membran aufgrund ihrer Grösse nicht passieren können. Dabei handelt es sich zum Beispiel um Fruchtsäuren, phenolische Bestandteile, sowie einfache und höhere Zucker, Proteine und natürliche Farbstoffe. Kleine Moleküle wie Alkohol und Wasser werden von der Nanofiltermembran ins Permeat durchgelassen. Ebenso gehen auch zum Teil Fruchtsäuren sowie teilweise wertvolle Bukett-Aromastoffe ins Permeat über.

Vorzugsweise wird eine Nanofiltermembran mit einer Filterqualität gewählt, welche ein guter Kompromiss zwischen Rückhaltung der Extrakt- und Aromastoffe bei gleichzeitig guter Permeatleistung (Wasser-Alkohol mit einigen wichtigen Aromastoffen und Fruchtsäuren) sicherstellt.

Sehr vorteilhaft ist es, wenn die Permeation bei Raumtemperatur durchgeführt wird, also in einem Temperaturbereich von ca. 18°C bis ca. 29°C. Höhere Temperaturen sind möglich, können aber zur Schädigung des Extraktes, der Farbe und der Aromen führen; niedrigere Temperaturen können die Permeationsleistung vermindern. Technisch möglich ist beispielhaft ein Temperaturbereich von 0°C bis 50°C. Für die meisten Kombinationen aus Getränke-Ausgangsprodukt und Nanofiltermembran hat sich eine Temperatur von 25°C ± 1°C als bestens geeignet herausgestellt.

Besonders vorteilhaft ist es, wenn bei der nicht-thermischen Permeation das Retentat bzw. das Getränke-Ausgangsprodukt mehrmals zirkulierend auf die Nanofiltermembran zu und wieder von dieser weg geleitet wird. Das Zuleiten kann beispielsweise über eine Zuleitung und das Wegführen jeweils über einen Rezirkulationsausgang erfolgen.

Dem aus der Permeation resultierenden aroma- und alkoholhaltigen Permeat werden seine Aromastoffe entzogen, ehe ihm der Alkohol zum Beispiel in einem Destillationsprozess oder einem anderen adäquaten Verfahren entzogen wird. Für den Entzug der Aromastoffe wird eine Kalt-Adsorption im Aromenadsorber durchgeführt, bei der das aroma- und alkoholhaltige Permeat über ein Aromen adsorbierendes Adsorptionsmittel oder durch ein solches Adsorptionsmittel bzw. durch ein poröses Adsorptionsmittelbett mit einem solchen Adsorptionsmittel geleitet wird.

Die entalkoholisierte Permeat-Wasserphase wird während der Ausmischung vorteilhaft als Rezepturbestandteil zur Rekonstruktion des alkoholreduzierten Getränkes verwendet und/oder es wird auch als Verdünnungsmittel in den Permeationsprozess zurückgeführt, und zwar insbesondere zur Vermeidung einer zu hohen Konzentration an Extraktstoffen im zirkulierenden Retentat/Getränke-Ausgangsprodukt, wenn der Permeationsprozess wie oben beschrieben abläuft; und/oder es wird im Rekuperationsprozess eingesetzt, insbesondere wenn für den Rekuperationsprozess lebensmittelreiner Dampf benötigt wird (siehe weiter unten) zur Erzeugung desselben. Dies ist besonders Vorteilhaft, da auf diese Weise lebensmittelrechtlich unstatthafte Fremdwasserzugaben vermieden werden können.

Das Adsorptionsmittel des Aromenadsorbers ist abgestimmt auf die zu erwartenden Aromen. Vorteilhafter Weise handelt es sich bei dem Adsorptionsmittel um entsprechend ausgewählte Aktivkohle oder entsprechend ausgewählte Resine. Je nach den erwarteten Aromen und den Eigenschaften des Resins kann ein Resin oder eine Mischung verschiedener Resine als Adsorptionsmittel verwendet werden.

Die Aromastoffe aus dem Adsorptionsmittel werden dann in einem Rekuperationsprozess, insbesondere einer Dampfrekuperation, in Form einer Aromaphase zurückgewonnen.

Sollte trotz der hervorragenden Rückgewinnung von Aromen und des Erhalts der meisten geschmacksrelevanten Komponenten in ihrer ursprünglichen Form eine Geschmackskorrektur nötig sein, so kann das entalkoholisierte Getränk während der Ausmischung noch mit geeigneten, gestatteten Zusätzen von Fruchtsaftkonzentraten und/oder Fruchtsäuren und/oder Kohlensäure versetzt werden und/oder mit gestatteten Wein-Schönungsmitteln behandelt werden.

Besonders wirtschaftlich wird das Verfahren als kontinuierliches Verfahren durchgeführt. Aber das Verfahren ist natürlich auch als diskontinuierliches Verfahren, sogenanntes Batchverfahren durchführbar, insbesondere wenn nur geringere Mengen zu verarbeiten sind. In einem solchen Fall oder bei mittleren Mengen an zu verarbeitenden alkoholhaltigen Getränken kann es wirtschaftlich sinnvoll sein, wenn bestimmte Verfahrensschritte des Verfahrens als Batchverfahren und andere Verfahrensschritte kontinuierlich durchgeführt werden.

Eine Anlage zur Herstellung eines entalkoholisierten Getränks aus einem alkoholhaltigen Getränke-Ausgangsprodukt ist typischerweise mit einem Permeationsmodul zur Trennung des alkoholhaltigen Getränke-Ausgangsprodukts in ein alkohol- und aromahaltiges Permeat und ein nahezu alkoholfreies und aromahaltiges Retentat, einem Modul zur Entalkoholisierung des alkohol- und aromahaltiges Permeats und einem Ausmischungsmodul zur Mischung von Retentat und entalkoholisiertem Permeat versehen. Des Weiteren weist es zur Gewinnung einer Aromaphase aus dem alkoholhaltigen und aromahaltigen Permeat ein Aromenadsorber auf, der funktional zwischen dem Permeationsmodul und dem Modul zur Entalkoholisierung vorgesehen ist. Außerdem weist der Aromenadsorber eine weitere funktionale Verbindung für die Weiterleitung der Aromaphase zum Ausmischungsmodul auf, so dass die Aromaphase im Ausmischungsmodul mit einer entalkoholisierten, entaromatisierten Permeat-Wasserphase aus dem Modul zur Entalkoholisierung und dem Retentat aus dem Permeationsmodul zusammenführbar ist.

Vorteilhafterweise ist der Aromenadsorber zur Adsorption der Aromastoffe mit einem Adsorptionsmittel versehen, welches insbesondere in durchströmbaren Kartuschen angeordnet ist. Er ist in einem solchen Fall funktional mit einem Rekuperationsmodul derart verbunden, dass die Aromastoffe aus dem Adsorptionsmittel rekuperierbar sind, und zwar vorzugsweise mittels in einem Dampferzeuger erzeugten Dampfs.

Das erfindungsgemässe Verfahren und eine erfindungsgemässe Anlage zur Durchführung des Verfahrens werden nachfolgend anhand von in den Figuren dargestellten Ausführungsbeispielen näher beschrieben. Die Erläuterungen erfolgen nur beispielhaft und haben keine beschränkende Wirkung. Gleiche Elemente sind in den Figuren mit gleichen Bezugszeichen gekennzeichnet. Die Figuren zeigen rein schematisch:
- Fig.1: eine skizzenhafte Darstellung des erfindungsgemässen Verfahrens;
- Fig.2: eine skizzenhafte Darstellung einer möglichen Ausführungsform einer erfindungsgemässen Anlage zur Herstellung eines entalkoholisiertem Getränks nach dem erfindungsgemässen Verfahren; und
- Fig. 3: eine besondere Ausführungsform eines Aroemenadsorbers, wie er in einer erfindungsgemässen Anlage verwendbar ist.

Das Verfahren und die Anlage zur Durchführung des Verfahrens sind modular aufgebaut. Die Modul-Komponenten sind gemäss den jeweiligen technischen Bedingungen zusammenstellbar. Dabei sind die technischen Bedingungen durch das zu verarbeitende Getränke-Ausgangsprodukt bestimmt und von der Art, wie das Verfahren betrieben wird, nämlich ob es als kontinuierliches Verfahren, teilkontinuierliches Verfahren oder als Batchverfahren durchgeführt wird.

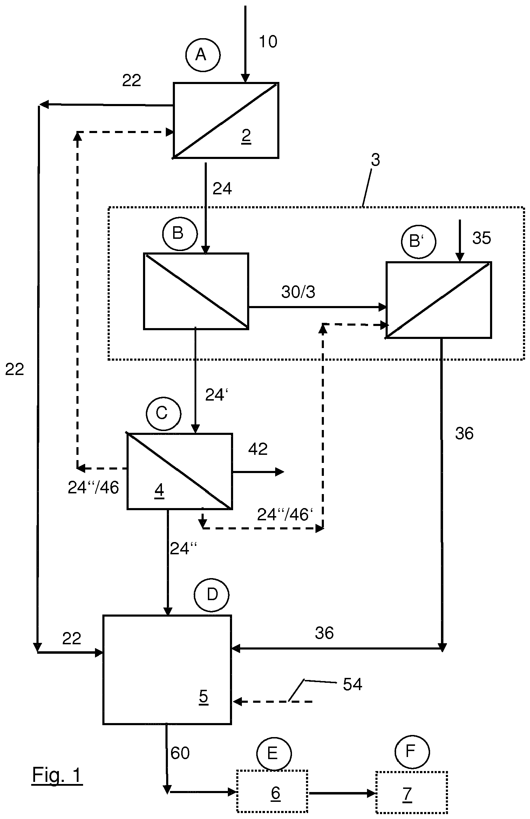

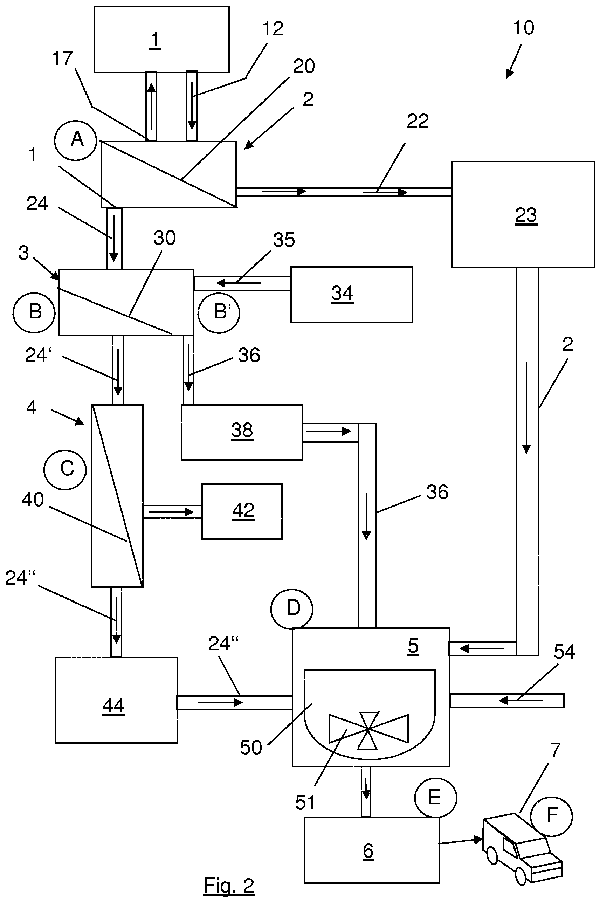

Im Folgenden werden anhand der Figuren 1 und 2 das erfindungsgemässe Verfahren, durchgeführt als Batchverfahren, und eine Ausführungsform einer erfindungsgemäßen Anlage zur Durchführung des Verfahrens beschrieben. Bei der Darstellung der Anlage wurde zwecks Übersichtlichkeit bewusst auf Darstellung und Beschreibung von Regelventilen, Schaugläsern, Steuerungen und anderen Elementen, deren Einsatzort und Verwendung innerhalb der Anlage dem Anlagenbauer geläufig sind, verzichtet. Ebenso sind Aufbaurahmen und die periphere Verrohrung nicht dargestellt.

In einem Vorratsbehälter 1 wird das Getränk-Ausgangsprodukt 10, in diesem Beispiel Wein, zur Verfügung gestellt und über eine Zuleitung 12 einem Permeationsmodul 2 zugeführt.

Das Permeationsmodul 2 umfasst eine Nanofiltermembran 20 (beispielsweise Filmtec-NF90-400, Hersteller: Dow). Mit Hilfe einer Hochdruckpumpe (erhältlich beispielsweise von HydraCell, Schweiz (nicht dargestellt)) wird das Getränk-Ausgangsprodukt 10 unter einem erhöhten Druck von beispielsweise 30bar über die Nanofiltermembran 20 geführt. Der gewählte Druck beeinflusst die Durchflussleistung, wobei sich die Durchflussleistung auf die Permeationsleistung und somit auf die Effizienz der Anlage auswirkt. Vorteilhafterweise wird die Permeation A bei Raumtemperatur durchgeführt, um eine gute Permeationsleistung ohne Gefährdung der Inhaltsstoffe zu gewährleisten. Das alkoholhaltige Getränk-Ausgangsprodukt 10 hat also bei diesem Verfahrensschritt eine Temperatur von 18°C bis 29°C, vorzugsweise und in diesem Beispiel eine Temperatur von 25°C ± 1°C. Der für die Permeation A gewählte Druck beeinflusst zusammen mit der gewählten Temperatur die Zusammensetzung von Retentat und Permeat.

Der Nanofilter 20 ist vorteilhafterweise spiralförmig aufgebaut. Hierfür weist der Nanofilter Filterlagen auf, welche spiralförmig angeordnet sind und von Abstandshaltern, die beispielsweise aus Kunststoff bestehen, auseinandergehalten und fixiert werden. Die Anordnung des Nanofilters 20 ist mit Vorteil so gewählt, dass das Permeat 24 durch den Nanofilter 20 auf die Filtratseite durchtritt und unter seinem Eigendruck aus dem Permeationsmodul 2 ausgeführt wird. Das Permeationsmodul 2 weist wenigstens zwei Ausgänge bzw. Ableitungen auf, nämlich einen Permeat-Ausgang 18 und einen Rezirkulationsausgang 17. Der letztere dient dazu, im Permeationsmodul 2 eine hohe Überströmgeschwindigkeit der Nanofilterlagen zu erreichen, und so eine Anlagerung eines Filterkuchens oder eine lokale Konzentration von rückgehaltenen Bestandteilen zu verhindern. Das alkoholhaltige Getränke-Ausgangsprodukt 10 wird also über die Zuleitung 12 dem Permeationsmodul 2 zugeführt, über dessen Nanofilter 20 geleitet, via den Rezirkulationsausgang 17 in den Vorratsbehälter 1 rückgeführt und über die Zuleitung abermals dem Permeationsmodul 2 zugeführt und so weiter, so dass das Getränke-Ausgangsprodukt 10 über die Filterlagen des Nanofilters 20 zirkuliert. Dabei konzentrieren sich die von dem Nanofilter 20 zurückgehaltenen Stoffe im Getränk-Ausgangsprodukt 10 immer mehr auf und der Gehalt an Alkohol und an durch den Nanofilter 20 hindurchtretenden Aromen und anderen Inhaltstoffen nimmt ab. Das Getränk-Ausgangsprodukt 10 verwandelt sich so unter Volumenabnahme in das Retentat 22.

Um einen effizienten Permeationsprozess zu fördern und um auch die Nanofiltermembran zu schützen, beispielsweise vor Filterkuchenbildung etc., kann oder soll dem zirkulierenden Ausgangsprodukt/Retentat "Wasser" zugemischt werden. Dieses "Wasser" (gestrichelt dargestellte Zuführung 24"/46) stammt vorzugsweise aus dem Destillationsprozess C wie dieser weiter unten beschrieben ist, und ist die sich als Schlempenwasser sammelnde aromafreie und alkoholfreie Permeat-Wasserphase 24". Auf diese Weise kann allein mit dem im Ausgangsgetränk enthaltenen Wasser gearbeitet werden und es muss kein Frischwasser zugeführt werden.

Ist der Alkoholgehalt auf den gewünschten Wert gesunken, und die zirkulierende Flüssigkeit des Getränk-Ausgangsprodukts zum Beispiel alkoholfrei (Alkoholgehalt unter 1 Volumenprozent), so wird dieser Anteil des Getränk-Ausgangsprodukts als Retentat 22 in einen Retentat-Puffertank 23 ausgeleitet. Bei Wein, wie in diesem Beispiel, ist dann das Retentat im Vergleich zum Getränke-Ausgangsprodukt etwa 75% konzentriert, das heisst die im Retentat 22 enthaltenen Stoffe liegen im Retentat 22 um das 4-Fache konzentrierter vor als im Getränke-Ausgangsprodukt 10.

Je nach Ausgangsprodukt ist der Grenzwert, bis zu dem konzentriert werden kann unterschiedlich. Zu hohe Konzentrationen bestimmter Stoffe im Retentat bzw. im zirkulierenden Getränke-Ausgangsprodukt bergen die Gefahr der Sedimentation von Inhaltstoffen, namentlich der Fruchtsäuren und/oder ihrer Salze, welche zur Zerstörung der Nanofiltermembranen führen können. Neue Generationen von Nanofiltermembranen könnten hier natürlich neue Möglichkeiten schaffen.

In einem (hier nicht dargestellten) kontinuierlichen Verfahren würde das Getränke-Ausgangsprodukt kontinuierlich und nicht aus einem Vorratsbehälter zugeführt. Statt das Getränke-Ausgangsprodukt über einer Nanofiltermembran zirkulieren zu lassen bis es als Retentat mit gewünschter Konzentration vorliegt, würden viele solcher Nanofiltermembranen funktional hintereinander angeordnet werden und das Getränke-Ausgangsprodukt würde unter Beimischung der Permeat-Wasserphase 24" über die Kaskade aus Nanofiltermembranen geleitet bis es als Retentat die gewünschte Aufkonzentration der durch die Nanofiltermembranen zurückgehaltenen Stoffe zeigt.

Wie oben angedeutet, verbleiben im resultierenden Retentat 22 die grösseren Moleküle wie Farbstoffe und Extraktstoffe sowie grossmolekulare oder polare Aromastoffe. Das als Zwischenprodukt in diesem Verfahrensschritt anfallende Permeat 24 ist eine wasserhelle Phase und enthält abgetrenntes Wasser, Alkohol, sowie grosse Teile der flüchtigen Aromastoffe, welche je nach verwendeter Membran eher aus kleinen und/oder unpolaren Molekülen besteht.

Das Permeat 24 wird weitergeleitet zum Aromenadsorber 3, der dem Permeationsmodul 2 funktional direkt nachgeschaltet ist. Im Aromenadsorber 3 werden dem alkoholhaltigen und aromahaltigen Permeat 24 in einer besonders aromaschonenden Kalt-Adsorption B die Aromastoffe entzogen. Die Abtrennung der aromatischen Inhaltsstoffe erfolgt - getrennt von der nachfolgenden thermischen Behandlung des Alkoholentzugs - durch ein nichtthermisches Absorptionsverfahren an einem speziell auf die im Permeat 24 enthaltenen Aromastoffe abgestimmten Adsorptionsmittel 30. Besonders bewährt haben sich als Adsorptionsmittel 30 Resine, welche auf die Aromastoffe des alkoholhaltigen und aromahaltigen Permeats 24 abgestimmt sind. Das zur Aroma-Adsorption benötigte Resin (in dem hier gewählten Beispiel mit Wein als Ausgangsprodukt ist das z.B. Macronet 200 - Hersteller: Purolite) ist in diesem Beispiel in Aromenadsorber-Kartuschen gefüllt vorgesehen, die in der Form oder Anordnung von durchströmbaren Adsorptionsbetten vorliegen.

Durchströmt oder überströmt das alkoholhaltige und aromahaltige Permeat 24 das Adsorptionsmittel 30, dann entziehen diese dem Permeat 24 die Aromastoffe, welche sich entsprechend im Adsorptionsmittel 30 anreichern. Der Durchtritt des Permeats 24 beispielsweise durch eine Adsoprtionskolonne oder auch das Überströmen eines Adsorptionsmittels erfolgt nahezu drucklos. Der Druck muss lediglich ausreichen um ein gleichmässiges, kontrolliertes Durchströmen oder Überströmen zu gewährleisten, damit sich die Aromen anlagern können. Es resultiert ein entaromatisiertes, alkoholhaltiges Permeat 24', welches im Wesentlichen nur mehr Wasser, Alkohol und Fruchtsäuren enthält. Das entaromatisierte Permeat 24' wird entweder direkt dem Destillationsmodul 4 zugeführt, oder in einem Pufferbehälter (nicht dargestellt) zwischengelagert.

Den Adsorptionsmitteln 30 werden die Aromen durch ein Rekuperationsverfahren B' entzogen. In dem hier gezeigten Beispiel ist das Rekuperationsverfahren eine Dampfrekuperation, bei der die Rekuperation B', also Rückgewinnung der abgetrennten Aromen durch die Beaufschlagung des Adsorptionsmittels mit lebensmittelreinem Dampf 35 erfolgt. Zur Dampferzeugung dient in diesem Beispiel ein elektrischer Lebensmittel-Dampferzeuger 34, dessen Kapazität angepasst an den benötigten Dampfausstoss gewählt wird und in diesem Beispiel eine Kapazität von 50 kg Dampf pro Stunde aufweist. Die Aromen werden vom Dampf 35 aufgenommen, der aromenhaltige Dampf wird kondensiert und die resultierende konzentrierte wässrige Aroma-Fraktion, die als Aromaphase 36 bezeichnet wird, beispielsweise in einem Pufferbehälter 38 zwischengespeichert. Die Aromaphase 36 fällt, bei der in diesem Beispiel beschriebenen Entalkoholisierung von Wein, in Mengen von etwa 3 bis 30% an, berechnet auf die Menge des ursprünglichen Ausgangsgetränkes und weist als wesentliche Bestandteile Wasser, aromatische Bestandteile und geringe Mengen Alkohol auf.

Zur Rekuperation B' der Aromen mittels Dampf ist anzumerken, dass erstaunlicherweise der Einsatz von Hitze bei der Behandlung der Aromen mit dem lebensmittelreinem Dampf den Aromen nach Abtrennung des sauren Extraktes nicht mehr schadet.

Durch den vorgeschalteten Entzug der Aromastoffe wird die spätere Abtrennung des Alkohols aus dem alkoholhaltigen aber entaromatisierten Permeat 24' stark vereinfacht, da auf die bezüglich Wärme, Sauerstoff und Flüchtigkeit empfindlichen Aromen keine Rücksicht mehr genommen werden muss. Das entaromatisierte, jedoch noch alkoholhaltige Permeat 24' wird daher durch eine einfache fraktionierte Destillation C von seinem Alkohol getrennt. Das Destillationsmodul 4 umfasst entsprechend eine Destillationskolonne 40 zur fraktionierten Destillation nach gängigen Prinzipien, wobei vorzugsweise energiesparend unter Vakuum gearbeitet wird.

Für ein Alkoholfreies Endprodukt wird die Destillation C vorzugsweise so betrieben, dass in der Schlempe ein Restalkoholgehalt von weniger als 0.1vol% zurückbleibt.

Die Destillationsanlage 4 ist hierfür mit einer Destillationskollonne 40 versehen, die mit Vorteil Verstärkerböden oder entsprechende Einbauten aufweist aber trotzdem im Aufbau einfach bleiben kann, da keine weiteren spezifischen Trennaufgaben gefordert werden (wie z.B. im Stand der Technik üblich die Aromatrennung vom Alkohol). Der Alkohol wird aus der Destillationskollonne 40 abgeführt und in einem Alkoholsammelbehälter 42 aufgefangen. Er kann von dort seiner weiteren Bestimmung zugeführt werden, die von dem hier beschriebenen Verfahren und seinem Produkt unabhängig ist.

Wenn keine weitere wirtschaftliche Verwertung des Alkohols vorgesehen ist, und der verdünnte Alkohol ins öffentliche Entsorgungsnetz abgeführt werden darf, ist alternativ zur Destillation die Alkoholabtrennung mittels eines Fallstromverdampfers möglich.

Das nun entaromatisierte und entalkoholisierte Permeat, das während der Destillation C primär als Schlempe anfällt, wird als Permeat-Wasserphase 24" bezeichnet und kann noch geschmacksrelevante Bestandteile enthalten, wie zum Beispiel Fruchtsäuren. Die Permeat-Wasserphase 24" wird entweder wie hier dargestellt in einem Auffangbehälter 44 zwischengelagert oder direkt ihrer weiteren Bestimmungen zugeführt. Im folgenden Schritt des Entalkoholisierungsverfahrens, der als Ausmischung D bezeichnet wird, wird die Permeat-Wasserphase 24" zum Beispiel zur Rückverdünnung verwendet. Die Permeat-Wasserphase 24" fällt im Überschuss an, d.h. nicht das gesamte anfallende Volumen der Permeat-Wasserphase 24" wird im Verfahrensschritt "Ausmischung" D zur Rückverdünnung benötigt. Überbleibende Reste werden daher erstens zur Erzeugung von lebensmittelgeeignetem Dampf 35 im Dampferzeuger 34 verwendet (in Fig. 1 mit gestrichelter Linie dargestellte Zuführung 24"/46') und zweitens zur kontinuierlichen Rückverdünnung des im Permeationsverfahren A zirkulierenden Retentats/Getränke-Ausgangsprodukts (in Fig. 1 mit gestrichelter Linie dargestellte Zuführung 24"/46). Diese Vorgangsweise stellt sicher dass nur Wasser aus dem Ausgangsgetränk selbst zur Rückverdünnung und Prozessführung verwendet wird. Bei der Herstellung von entalkoholisiertem Wein, wie in diesem Beispiel gezeigt, beschränkt sich der Zusatz von Fremdwasser dann auf die bestimmungsgemässe Rückverdünnung des möglicherweise als Zusatz in der Endrezeptur enthaltenen Traubensaftes.

Im Ausmischmodul 5, das einen Ausmischbehälter 50 mit einer Mischvorrichtung 51 umfasst, werden das Retentat 22, die Aromaphase 36 und die Permeat-Wasserphase 24' zur Rekonstruktion, auch als Rekonstitution bezeichnet, des entalkoholisierten Getränks 60 zusammengeführt und ausgemischt. Die Ausmischung D erfolgt vorteilhafter Weise in geeigneten Edelstahlbehältern, wie in der Getränkeindustrie üblich. Es wird ein klassisches Mischverfahren angewendet, welches einer entsprechenden Rezeptur gemäss die Ausmischung des entalkoholisierten Getränkes 60 erlaubt. Hierzu werden die oben genannten Fraktionen, Retentat 22, Aromaphase 36 und Permeat-Wasserphase 24" aus den Teilschritten Permeation A, Adsorption B, Alkoholabscheidung/Entalkoholisierung C verwendet. Falls nötig werden zur Geschmackskorrektur weitere Rezepturbestandteile 54 zugemischt. Unter solchen weiteren Rezepturbestandteilen 54 werden solche Zuschlagstoffe und Schönungsmittel und Prozesse verstanden, die auch bei der Herstellung alkoholischer Getränke üblich und lebensmittelrechtlich erlaubt sind, wie das Zusätzen von Fruchtsaftkonzentraten, Fruchtsäuren, Kohlensäure oder von anderen gestatteten Wein-Schönungsmitteln. Um zum Beispiel schädlichen Sauerstoff auszutreiben, wird die im Ausmischbehälter zusammengeführte Flüssigkeit mit Kohlendioxid beaufschlagt, Hierzu bedarf es nur ganz wenig Kohlendioxid, nämlich nur Mengen bis zu 6 g/Liter, wobei meist bereits 19/l bis 2 g/l ausreichen, sowie vorteilhaft die Installation eines CO2 Schutzgaspolsters über der Flüssigkeit im Ausmischbehälter 50. Wie gesagt wird für die Ausmischung des entalkoholisierten Getränks 60 das im Prozess anfallende Eigenwasser (Schlempe/Permeat-Wasserphase aus der Destillation) verwendet. Der Zusatz von Fremdwasser wird höchstens, wenn Traubensaft zugesetzt wird, zur Rückverdünnung von Traubensaftkonzentrat bis zu seiner Einfachsaftkonzentration zugesetzt.

In einer bevorzugten Ausführungsform des Verfahrens bzw. der Anlage zur Ausführung des Verfahrens werden alle Verfahrensschritte automatisch überwacht und mit Hilfe einer Auswerte- und Recheneinheit mittels eines Computerprogramms gesteuert.

Dementsprechend existiert ein Computerprogrammprodukt, das auf einem maschinenlesbaren Träger gespeichert ist, oder als Computer-Datensignal, verkörpert durch eine elektromagnetische Welle, mit Programmcode, in der Lage ist die Anlage zu steuern bzw. das Verfahren durchzuführen.

Nach Fertigstellung des Getränke-Endprodukts bzw. fertig ausgemischten entalkoholisierten Getränks, wird dieses in einer Abfüllstation 6 in Flaschen oder geeignete Lagergebinde abgefüllt (Abfüllung E) und schliesslich mit entsprechenden Transportmitteln 7 ausgeliefert (Auslieferung F).

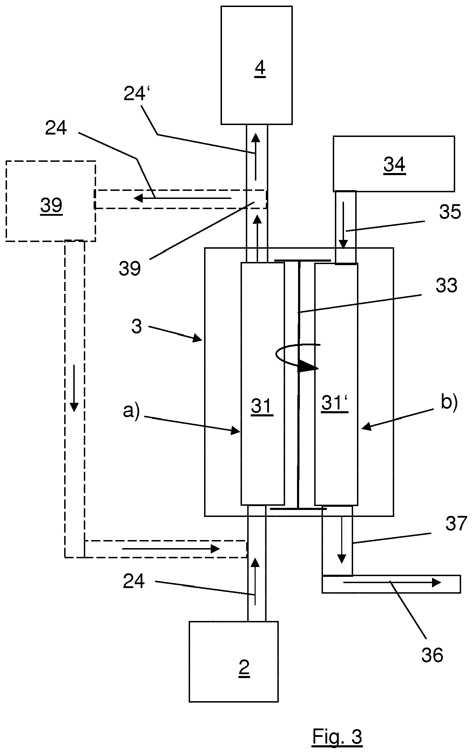

In Figur 3 ist eine besondere Ausführungsform eines Aromenadsorbers 3 gezeigt. Der Aromenadsorber 3 ist wiederum direkt an das Permeationsmodul 2 angeschlossen. Als Adsorptionsmaterial ist hier ein Gemisch aus verschiedenen Resinen gewählt, die in Form von kleinen Resinkügelchen (Durchmesser 0.05 mm bis 1.5 mm vorzugsweise 0.2 mm bis 0.8 mm) verteilt in zwei vertikal angeordneten Adsorptionsmittelbehältern in Form von Edelstahlrohren 31, 31' gefüllt sind. Der Durchmesser der Rohre wird entsprechend des gewünschten Durchsatzes gewählt und liegt in diesem Beispiel in einem Bereich von 100mm bis 200mm, vorzugsweise bei 150mm. Die Rohre 31, 31' sind oben und unten mit einem Edelstahlsieb ausgerüstet, welches zwar das Resin fixiert, jedoch das Permeat 24 frei durchtreten lässt. Die so ausgestalteten Rohre werden im weiteren Kartuschen 31, 31' genannt. Sie werden jeweils einzeln benutzt, aber sinnvoll parallel geschaltet, um eine ausreichende Adsorptionskapazität sicherzustellen. Für die Adsorption der Aromen werden die Kartuschen mit einem fast drucklosen Permeatstrom durchströmt. Empfehlenswert ist ein Durchstrom von maximal 5 bis 6 Bettvolumen pro Stunde und Längenmeter der Kartusche, was bei einer 3-Meter langen Kartusche 15 bis 18 Bettvolumen wären. Unter Bettvolumen wird hier das innere Volumen verstanden, welches das Adsorptionsmittel aufweist, das in dem hier vorgestellten Beispiel aus vielen kleinen Adsorptionspartikeln (vorzugsweise kleinen Kugeln) besteht - wobei klein hier eine Korngrösse bzw. einen Durchmesser von etwa 0.05mm bis 2mm bedeutet. Das gleiche bzgl. Bettvolumen gilt auch bei Adsorptionsmitteln aus einem porösen Material mit durchgehenden Poren, wie z.B. Aktivkohle.

Die Entaromatisierung des Permeats 24 findet während des Durchtritts des Permeats 24 durch die Resinpackung in der Kartusche statt. Das Permeat 24 wird jeweils von unten nach oben durch die Kartuschen geführt, wobei sich das Resingemisch graduell von unten nach oben mit den Aromabestandteilen absättigt. In der gezeigten Abbildung wird jeweils die links auf Position a) befindliche Kartusche von unten nach oben vom Permeat 24 durchströmt.

Das entaromatisierte, alkoholhaltige Permeat 24' wird an das Destillationsmodul 4 weitergeleitet.

Je nach Aromenbeladung des Getränke-Ausgangsproduktes 10 und dem entsprechenden Aromengehalt des Permeats 24 kann eine vollständige Sättigung des Kartuscheninhaltes erreicht werden, und es kann zu einem Aromendurchbruch kommen, das heisst ausgangsseitig der Kartusche auf Position a) kann das Permeat 24 noch Aromastoffe enthalten, was aber nicht wünschenswert ist. Um einen Aromendurchbruch rechtzeitig zu erkennen, wird der Gehalt an Aromastoffen ausgangsseitig der Kartusche auf Position a) in einer Überwachungsstation 39 überwacht. Die Überwachung and der Überwachungsstation 39 kann durch einen geschulten Operator sensorisch, also z.B. aufgrund der Farbe, des Geschmacks bzw. Geruchs des austretenden Permeats erfolgen, es kann aber zum Beispiel auch durch eine Leitfähigkeitsmessung erfolgen. Bei einem Aromendurchbruch wird auf eine frische, parallel geschaltete Kartusche umgeschaltet. Das heisst, die aromagesättigte Kartusche von Position a) wird durch eine frische, "aromafreie" Kartusche, welche sich bis dahin auf einer parallelen Position b) befunden hat, ausgetauscht.

In dem gezeigten Beispiel ist dieser Austausch von Position a) nach Position b) durch einen Drehmechanismus 33 ermöglicht. Es können aber auch laterale Verschiebungsmechanismen vorgesehen sein oder statt einem Positionswechsel der Kartuschen können die Anschlüsse bzw. die Zu- und Ableitungen zu und von den Kartuschen getauscht werden. Während des Austauschs der Kartuschen oder auch bei Zwischenfällen, wenn es beispielsweise nicht möglich ist, die aromagesättigte Kartusche rasch durch eine aromafreie Kartusche zu ersetzen, kann der Strom mit noch aromhaltigem Permeat im Anschluss an die Überwachungsstation 39 des Permeationsmoduls 2 umgeleitet und z.B. in einem Puffertank 32 gespeichert werden und gegebenenfalls später durch eine frische Kartusche geleitet werden (mit gestrichelter Linie angedeutet).

In dem abgebildeten Beispiel ist die Kartusche 31' aromengesättigt und eben von Position a) auf Position b) gegen eine Kartusche 31 getauscht worden, so dass nun die frische Kartusche 31 mit ihren Resinen dem Permeat 24 auf Position a) die Aromen entzieht. Die aromengesättigte Kartusche 31' auf Position b) wird gleichzeitig regeneriert, d.h. mit lebensmittelreinem Dampf 35 durchströmt, wobei das vorher adsorbierte Aroma in konzentrierter Form zurückgewonnen wird und ausgangsseitig nach Kondensation in einem Kühler 37 als Aromaphase 36 abgeführt wird.

Es hat sich als sehr vorteilhaft erwiesen, den Dampf 35 in der umgekehrten Richtung zu der Richtung, die das Permeat 24 vorher durch die Kartusche genommen hat, - nämlich von oben nach unten zu durchströmen.

### Beispiel 1

Für die Verarbeitung von zum Beispiel 300-4001 Wein pro Stunde benötigt man ein Permeationsmodul mit einer Nanofiltermembran (beispielsweise Filmtec-NF90-400, von Dow, wobei es viele andere Hersteller und Produkte gibt), welche beispielsweise eine Membran-Oberfläche von 70m2 bis 120m2 aufweist sowie entsprechende dimensionierte Aufnahmeeinheiten, insbesondere Aufnahmezylinder für diese Membranen, und Pumpen, welche das Getränkeausgangsprodukt mit einem Druck von mindestens 10bar, maximal 50bar und einem entsprechendem Strömungsdurchsatz auf die Nanofiltermembran zuführen. Für die angestrebte Verarbeitung würde sich beispielsweise eine Pumpe HydraCell P-35; mit einer Kapazität von 140 Liter/Minute eignen. Geringere Literdurchsätze sind ungünstig, da sie die Permeatleistung verringern. Adsorptionskartuschen wie sie beispielsweise anhand der Fig.3 beschrieben sind, eignen sich für diese Verarbeitungsvorgabe, wenn sie einen Durchmesser im Bereich von 100mm bis 200mm und eine Länge von etwa 1,5 bis 2,5 Meter haben. Als Adsorptionsmittel eignet sich wie bereits erwähnt z.B. ein Resin von Purolite, vertrieben unter dem Namen Macronet 200, wobei es hier viele verschiedene Hersteller und Produkte gibt. Zur Aromarückgewinnung aus den Adsorptionskartuschen ist ein Lebensmittel-Dampferzeuger mit einer Kapazität von 40 bis 60 kg Dampf pro Stunde geeignet. Für die Alkoholabscheidung mittels Destillation eignet sich z.B. eine Destillationskolonne aus rostfreiem Stahl mit einem Kolonnendurchmesser zwischen 200mm und 300mm und einer Packungshöhe im Bereich von 7m bis 10m in 2 Sektionen sowie mit 2 Tragrosten, einem Flüssigkeitsverteiler für einen Bereich von 20 1/h bis 80 1/h und einem entsprechenden Flüssigkeitssammler und -verteilboden für einen Bereich von 0.5 m3/h bis -1.8 m3/h. Daneben benötigt es entsprechende Regelventile, Schaugläser und Steuerungen.

### Beispiel 2:

Zusammensetzung eines nach dem erfindungsgemässen Verfahren mit einer erfindungsgemässen Anlage hergestellten alkoholfreien Rotweins, hergestellt aus einem Blauburgunder: Rotwein Retentat Blauburgunder: 280g oder 269ml; Rotwein Permeat-Wasserphase aus Destillation (Eigenwasser): 595g oder 589ml; Rotwein Aromaphase: 100g oder 99ml; Rotweinfruchtsaftkonzentrat 6fach konzentriert: 55g oder 41ml; Rest*: weitere Rezepturbestandteile und Fremdwasser. Säuregehalt: 4 g/l; CO2-Gehalt: 2 g/l; Alkoholgehalt: <0.5 vol%.
*Der Rest ergibt sich als Volumendifferenz von 1Liter abzüglich der genannten Bestandteile in ml.

### Beispiel 3

Zusammensetzung eines nach dem erfindungsgemässen Verfahren mit einer erfindungsgemässen Anlage hergestellten alkoholfreien Weissweins, hergestellt aus einem Cuvee blanc 2009, Barrique: Weisswein Retentat Cuvee blanc: 250g oder 245ml; Weisswein Permeat-Wasserphase aus Destillation (Eigenwasser): 560g oder 559ml; Weisswein Aromaphase: 150g oder 99ml; Weissweinfruchtsaftkonzentrat 6fach konzentriert: 60g oder 45ml; Rest*: weitere Rezepturbestandteile und Fremdwasser. Säuregehalt: 6 g/l; CO2-Gehalt: 2 g/l; Alkoholgehalt: <0.5 vol%;

*Der Rest ergibt sich als Volumendifferenz von 1Liter abzüglich der genannten Bestandteile in ml.

Wie aus diesen Beispielen ersichtlich, machen die mittels des Verfahrens aus dem ursprünglichen Getränke-Ausgangsprodukt (10) gewonnenen Stoffe - Aromaphase (36), Permeat-Wasserphase (24") und Retentat (22) - den allergrössten Teil des entalkoholisierten Getränke-Endprodukts aus. In den oben genannten Beispielen liegt der aus Geschmacksgründen zugesetzte Rest, welcher während der Ausmischung (D) des entalkoholisierten Getränks (60) in Form von weiteren Rezepturbestandteilen (54) der Mischung aus Aromaphase (36), Permeat-Wasserphase (24") und Retentat (22) beigesetzt wird, bei weniger als 5vol% des entalkoholisierten Getränks (60), nämlich einmal bei 4.3vol% und einmal bei 4.8vol%. Generell kann gesagt werden, dass bei diesem Verfahren der Rest aus weiteren Rezepturbestandteilen (54), der zur Geschmacksoptimierung zugesetzt wird, unter 10vol% und insbesondere unter 6vol% oft sogar unter 4vol% bezogen auf das entalkoholisierte Getränk (60) liegt.

Zusammenfassend kann also gesagt werden, dass die sowohl sensorisch als auch getränketypisch wertbestimmenden Bestandteile des Getränke-Ausgangsprodukts technisch als Fraktionen separiert dargestellt werden, nämlich als Retentat, Aromaphase und als Permeat-Wasserphase, um später vorteilhaft wieder neu zusammengestellt werden zu können. Die erfindungsgemässe Neuerung liegt erstens in der Gewinnung der unbeeinträchtigten sensiblen sensorischen Inhaltstoffe durch nicht-thermische Verfahrensschritte, nämlich Dealkoholisierung des alkoholischen Getränkes mittels Permeation und sofortige anschliessende Abtrennung der Aromen durch Kaltadsorption, und zweitens dadurch bedingt in einer Vereinfachung der Alkoholabscheidung, in einem unkritischen z.B. auch thermischen Prozess (Destillation) und einer daraus resultierenden einfachen Gewinnung einer nicht sensiblen Fraktion, nämlich der Permeat-Wasserphase. Die Permeat-Wasserphase, die primär aus Wasser besteht aber auch noch für den Originalgeschmack wichtige Fruchtsäuren beinhalten kann, wird als Rezepturbestandteil zur Rekonstruktion des entalkoholisierten Getränks am Ende des Verfahrens gemäss der Ausmischungsrezeptur mit den anderen Fraktionen, nämlich dem Retentat, der Aromaphase und allenfalls weiteren Rezepturbestandteilen im Ausmischmodul 5 zusammengeführt und vermischt.

Wie oben dargestellt, ist es mit dem erfindungsgemässen Verfahren möglich ein alkoholfreies Getränk und insbesondere einen alkoholfreien Wein oder alkoholfreies Bier mit allen Attributen herzustellen, die das entsprechende normal alkoholhaltige Getränke und insbesondere ein normal gekelterter Wein aufweist. Der spezielle Anspruch des Verfahrens liegt auf der Erhaltung des typischen Geruchs (Buketts) und Geschmacks des Ausgangsproduktes, und zwar in höchster, bisher nicht erreichbarer Qualität. Ermöglicht wird dies durch die Abtrennung eines Grossteils der Aromen mittels Nanofiltration von der alkoholhaltigen Fraktion in einem Retentat und anschliessender Abtrennung der noch in der alkoholhaltigen Fraktion (Permeat genannt) vorhandenen Aromen mittels eines nicht-thermischen Aromen-Adsorptionsverfahrens, das vorzugsweise unter Ausschluss von Luftsauerstoff durchgeführt wird; durch anschliessende Entalkoholisierung der nun weitestgehend aromenfreien alkoholhaltigen Fraktion in einem Destillationsverfahren und Rückgewinnung der Schlempe sowie eine an die nicht-thermische Aromen-Adsorption anschliessende, möglichst vollständige Rückgewinnung der Aromen durch Wasserdampf-Austreibung aus dem Adsorptionsmittel und anschliessende Zusammenführung der so gewonnenen Aromen mit dem aromahaltigen Retentat und dem nun alkoholfreien Permeat.

Dem Fachmann ist klar, daß und in welcher Weise sich im Rahmen des Schutzbereichs der Patentansprüche die beschriebenen Ausführungsformen bzw. die anhand der Ausführungsbeispiele beschriebenen Details sinnvoll kombinieren und zusammenstellen lassen und wie dies technisch zu realisieren ist. Aus Platzgründen ist es aber nicht möglich alle möglichen und sinnvollen Kombinationen im Detail figürlich darzustellen und/oder zu beschreiben.

## Patentansprüche

1. Verfahren zur Herstellung eines entalkoholisierten Getränks (60) aus seinem alkoholhaltigen Getränke-Ausgangsprodukt (10), wobei das Verfahren folgende Schritte umfasst:
• Auftrennung des Getränke-Ausgangsprodukt (10) in ein alkoholhaltiges und aromahaltiges Permeat (24) und in ein aromahaltiges und nahezu alkoholfreies Retentat (22) mittels nicht-thermischer Permeation (A)
• Entalkoholisierung (C) des Permeats (24)
• Ausmischung (D) des entalkoholisierten Permeats mit dem nahezu alkoholfreien Retentat (22)
**dadurch gekennzeichnet, daß**
• dem aromahaltigen und alkoholhaltigen Permeat (24) vor der Entalkoholisierung (C) Aromastoffe in einer Kalt-Adsorption (B) entzogen werden, so dass
• einerseits aus der Kalt-Adsorption (B) die Aromastoffe in der Form einer Aromaphase (36) gewonnen werden und
• andererseits einem aus der Kalt-Adsorption (B) resultierenden, aromafreien aber alkoholhaltigen Permeat (24') anschliessend an die Kalt-Adsorption mittels einer Alkoholabscheidung der Alkohol entzogen wird (C), so dass eine wässrige, weitgehend entaromatisierte und entalkoholisierte Permeat-Wasserphase (24") resultiert und
• dass die Aromaphase (36), Permeat-Wasserphase (24") und das Retentat (22) zu einem entalkoholisierten Getränk (60) ausgemischt werden (D).

2. Verfahren nach Anspruch 1,
**dadurch gekennzeichnet, dass**
die Entalkoholisierung bzw. Alkoholabscheidung (C) aus dem entaromatisierten, alkoholhaltigen Permeat (24') mittels fraktionierter Destillation erfolgt.

3. Verfahren nach einem der Ansprüche 1 oder 2,
**dadurch gekennzeichnet, dass**
die Gewinnung der Aromastoffe in Form einer Aromaphase (36) dadurch erfolgt, dass für die Kalt-Adsorption (B) das aroma- und alkoholhaltige Permeat (24) über oder durch ein Aromen adsorbierendes Adsorptionsmittel (30), insbesondere ein Resin oder ein Gemisch aus verschiedenen Resinen, geleitet wird und die Aromastoffe aus dem Adsorptionsmittel (30) in einem Rekuperationsprozess (B'), insbesondere einer Dampfrekuperation, in Form der Aromaphase (36) zurückgewonnen werden.

4. Verfahren nach einem der vorhergehenden Ansprüche **dadurch gekennzeichnet, dass**
das Adsorptionsmittel (30) bzw. seine Zusammensetzung abhängig von den zu adsorbierenden Aromen gewählt wird.

5. Verfahren nach einem der vorhergehenden Ansprüche **dadurch gekennzeichnet, dass**
die nicht-thermische Permeation (A) mit Hilfe einer Nanofiltermembran (20) durchgeführt wird.

6. Verfahren nach einem der vorhergehenden Ansprüche **dadurch gekennzeichnet, dass**
die Nanofiltermembran (20) abhängig von der Zusammensetzung des Getränke-Ausgangsprodukts (10), das entalkoholisiert werden soll, ausgewählt wird.

7. Verfahren nach einem der vorhergehenden Ansprüche **dadurch gekennzeichnet, dass**
die nicht-thermische Permeation (A) abhängig von der Beschaffenheit der Nanofiltermembran und der gewünschten Zusammensetzung von Permeat (24) und Retentat (22) in einem Druckbereich von 10bar bis 50bar oder in einem Druckbereich von 20bar bis 40bar durchgeführt wird.

8. Verfahren nach einem der vorhergehenden Ansprüche **dadurch gekennzeichnet, dass**
die nicht-thermische Permeation (A) bei einer Temperatur im Bereich von 0°C bis 50°C, insbesondere bei 18°C bis 29° bzw. bei 22°C bis 26°C, noch besser bei 25°C±1°C durchgeführt wird.

9. Verfahren nach einem der vorhergehenden Ansprüche **dadurch gekennzeichnet, dass**
bei der nicht-thermischen Permeation (A) das Retentat (22) bzw. das Getränke-Ausgangsprodukt (10) mehrmals zirkulierend auf eine Nanofiltermembran (20) über ein Zuleitung (12) zugeleitet, über eine Rezirkulationsausgang (17) davon weggeführt und wieder darauf zugeleitet wird.

10. Verfahren nach einem der vorhergehenden Ansprüche **dadurch gekennzeichnet, dass**
die Permeat-Wasserphase (24") als Rezepturbestandteil zur Rekonstruktion des alkoholreduzierten Getränkes (60) während der Ausmischung (D) verwendet wird, und/oder als Verdünnungsmittel in den Permeationsprozess (A) zurückgeführt wird, und zwar insbesondere zur Verdünnung eines zirkulierenden Retentats/Getränke-Ausgangsprodukts, wenn der Permeationsprozess (A) gemäß Anspruch 10 abläuft; und/oder im Rekuperationsprozess (B') eingesetzt wird, insbesondere wenn für den Rekuperationsprozess (B') lebensmittelreiner Dampf (36) benötigt wird zur Erzeugung desselben.

11. Verfahren nach einem der vorhergehenden Ansprüche **dadurch gekennzeichnet, dass**
zur Geschmackskorrektur das alkoholreduzierte Getränk (60) während der Ausmischung (D) mit geeigneten, gestatteten Zusätzen von Fruchtsaftkonzentraten und/oder Fruchtsäuren und/oder Kohlensäure versetzt wird und/oder mit gestatteten Wein-Schönungsmitteln behandelt wird.

12. Verfahren nach einem der vorhergehenden Ansprüche **dadurch gekennzeichnet, dass**
das Verfahren als Batchverfahren durchgeführt wird.

13. Verfahren nach einem der vorhergehenden Ansprüche **dadurch gekennzeichnet, dass**
bestimmte Verfahrensschritte des Verfahrens als Batchverfahren und andere Verfahrensschritte kontinuierlich durchgeführt werden.

14. Anlage zur Herstellung eines entalkoholisierten Getränks (60) aus einem alkoholhaltigen Getränke-Ausgangsprodukts (10)mit
• einem Permeationsmodul (2) zur Trennung des alkoholhaltigen Getränke-Ausgangsprodukts (10) in ein alkohol- und aromahaltiges Permeat (24) und ein nahezu alkoholfreies und aromahaltiges Retentat (22)
• einem Modul (4) zur Entalkoholisierung (C) des alkohol- und aromahaltigen Permeats (24)
• einem Ausmischungsmodul (5) zur Mischung von Retentat (22) und entalkoholisiertem Permeat
**dadurch gekennzeichnet, dass**
• zur Gewinnung einer Aromaphase (36) aus dem alkoholhaltigen und aromahaltigen Permeat (24) ein Aromenadsorber (3) funktional zwischen dem Permeationsmodul (2) und dem Modul (4) zur Entalkoholisierung (C) vorgesehen ist, und dieser Aromenadsorber (3) eine weitere funktionale Verbindung zur Weiterleitung der Aromaphase (36) zum Ausmischungsmodul (5) aufweist, so dass die Aromaphase (36) dort mit einer entalkoholisierten, entaromatisierten Permeat-Wasserphase (24") aus dem Modul (4) zur Entalkoholisierung (C) und dem Retentat (22) aus dem Permeationsmodul (2) zusammenführbar ist.

15. Anlage nach Anspruch 14
**dadurch gekennzeichnet, dass**
der Aromenadsorber (3) zur Adsorption der Aromastoffe Adsorptionsmittel 30, insbesondere in durchströmbaren Kartuschen (31, 31'), aufweist und funktional mit einem Rekuperationsmodul (5') derart verbunden ist, dass die Aromastoffe aus dem Adsorptionsmittel (30) rekuperierbar sind, und zwar vorzugsweise mittels in einem Dampferzeuger (34) erzeugten Dampfs (35), und in Form der so gewonnenen Aromaphase (36) an das Ausmischungsmodul (5) weiterleitbar sind.

## Claims

1. Method for the production of a dealcoholised drink (60) made from an alcoholic basic drink product (10), comprising the following steps:
• separation by non-thermal permeation (A) of the alcoholic basic drink product (10) into an alcoholic permeate (24) comprising aroma substances, and a nearly alcohol-free retentate (22) comprising aroma substances;
• dealcoholisation (C) of the permeate (24);
• blending (D) of the dealcoholised permeate with the nearly alcohol-free retentate (22)
**characterized in that**
• aromatic substances are removed from the alcoholic permeate (24) comprising aroma substances in a cold adsorption process (B) prior to the dealcoholisation (C), so that
• on the one hand, the aroma substances are collected in an aroma phase (36) through cold adsorption (B); and
• on the other hand, the alcohol is removed (C) from the aroma-free, but alcohol-comprising permeate (24') that results from the cold adsorption (B), wherein alcohol removement (C) is ocured by means of an alcohol separation following the cold adsorption (B), causing an aqueous, extensively deflavoured and dealcoholised aqueous permeate phase (24");
• and that the aroma phase (36), the aqueous permeate phase (24") and the retentate (22) are blended (D) to produce a dealcoholised drink (60).

2. Method according to claim 1,
**characterized in that**
the dealcoholisation process (C) and alcohol separation, respectively, is performed by means of fractional distillation of the deflavoured alcoholic permeate (24').

3. Method according to claim 1 or 2,
**characterized in that**
the aroma substances are collected in form of an aroma phase (36) by
passing the alcoholic permeate (24) comprising aroma substances through or across an adsorbent (30) in the cold adsorption process (B), wherein the adsorbent (30) is in particular a resin or a mixture of several resins, able to adsorb aroma substances, and by recovering subsequently aroma substances in form of the aroma phase (36) from the adsorbent (30) in a recuperation process (B'), in particular a vapour recuperation.

4. Method according to any one of the preceding claims **characterized in that**
the adsorbent (30) or the composition of the adsorbent (30) is chosen on the basis of the aroma substances to be adsorbed.

5. Method according to any one of the preceding claims **characterized in that**
the non-thermal permeation (A) is performed using a nanofiltration membrane (20).

6. Method according to any one of the preceding claims **characterized in that**
the nanofiltration membrane (20) is chosen on the basis of the composition of the alcoholic basic drink product (10) to be dealcoholised.

7. Method according to any one of the preceding claims **characterized in that**
the non-thermal permeation (A) is performed at a pressure of between 10 bar and 50 bar or between 20 bar and 40 bar, based on the properties of the nanofiltration membrane and the desired composition of the resulting permeate (24) and retentate (22).

8. Method according to any one of the preceding claims **characterized in that**
the non-thermal permeation (A) is performed at a temperature between 0°C and 50°C, and more specifically between 18°C and 29°C, or between 22°C and 26°C, or better still at 25°C±1°C.

9. Method according to any one of the preceding claims **characterized in that**
during the non-thermal permeation (A), the alcoholic basic drink product (10) or the retentate (22), respectively, is supplied to a nanofiltration membrane (20) in a circulating manner through a supply line (12), removed through a recirculating outlet (17) and again supplied to the nanofiltration membrane.

10. Method according to any one of the preceding claims **characterized in that**
the aqueous permeate phase (24") is used as an ingredient for the reconstruction of the dealcoholised drink (60) during the blending (D) and/or returned to the permeation process (A) as a diluent, in particular to dilute a circulating retentate (22)/basic drink product (10), provided that the permeation process (A)) is performed according to claim 10; and/or used in the recuperation process (B') for the production of the vapour, especially if food-grade vapour (36) is required for the recuperation process (B').

11. Method according to any one of the preceding claims **characterized in that**
during the blending process (D) for flavour correction the dealcoholised drink (60) is treated with one or more additives selected from a group of suitable, permitted additives comprising fruit juice and/or fruit concentrate and/or fruit acids and/or carbon dioxide and/ wine fining agents.

12. Method according to any one of the preceding claims **characterized in that**
the method is performed in form of a discontinuous batchwise process.

13. Method according to any one of the preceding claims **characterized in that**
the method is performed in form of a process, wherein certain steps are performed in batches while other steps are performed continuously.

14. Apparatus for the production of a dealcoholised drink (60) from an alcoholic basic drink product (10) comprising
• a permeation module (2) for the separation of the alcoholic basic drink product (10) into an alcoholic permeate (24) comprising aroma substances, and a nearly alcohol-free retentate (22) comprising aroma substances
• a module (4) for the dealcoholisation (C) of the alcoholic permeate (24) comprising aroma substances
• a blending module (5) for the blending of retentate (22) and dealcoholised permeate
**characterized in that**
• an aroma adsorber module (3) is provided functionally between the permeation module (2) and the module (4) for dealcoholisation (C) for collecting an aroma phase (36) extracted from the alcoholic permeate (24) comprising aroma substances, wherein said aroma adsorber module (3) is provided with a further functional connection for transferring the aroma phase (36) to the blending module (5), so that the aroma phase (36) can be blended in the blending module (5) with the dealcoholised and deflavoured aqueous permeate phase (24") from the module (4) for the dealcoholisation process (C) and the retentate (22) from the permeation module (2).

15. Apparatus according to claim 14
**characterized in that**
for the adsorption of the aroma substances the aroma adsorber module (3) is equipped with an adsorbent (30), in particular with an adsorbent positioned in flow-through cartridges (31, 31'); and that the aroma adsorber module (3) is connected functionally to the recuperation module (5') so that the aroma substances are recuperable from the adsorbent (30), preferably by using a vapour (35) produced in a vapour generator (34), and are transferable in form of the collected aroma phase (36) to the blending module (5).

## Revendications

1. Procédé pour la préparation d'une boisson (60) désalcoolisée à partir de son produit de départ (10) de boisson contenant de l'alcool, le procédé comprenant les étapes suivantes :
- séparer le produit de départ (10) de boisson en un perméat (24) contenant de l'alcool et des substances aromatisantes et en un retentat (22) contenant des substances aromatisantes et pratiquement sans alcool au moyen d'une perméation (A) non thermique
- désalcooliser (C) le perméat (24)
- mélanger (D) le perméat désalcoolisé avec le retentat (22) pratiquement sans alcool, **caractérisé en ce que**
- des substances aromatisantes sont retirées du perméat (24) contenant des substances aromatisantes et de l'alcool dans une adsorption (B) à froid avant la désalcoolisation (C), de manière telle que
- d'une part, à partir de l'adsorption (B) à froid, on obtient les substances aromatisantes sous forme d'une phase (36) de substances aromatisantes et
- d'autre part, on retire l'alcool du perméat (24') résultant de l'adsorption (B) à froid, sans substances aromatisantes mais contenant de l'alcool, consécutivement à l'adsorption à froid, au moyen d'une séparation (C) d'alcool, de telle sorte qu'on obtient une phase aqueuse (24") de perméat dans une large mesure désaromatisée et désalcoolisée et
- on mélange (D) la phase (36) de substances aromatisantes, la phase aqueuse (24") de perméat et le retentat (22) en une boisson (60) désalcoolisée.

2. Procédé selon la revendication 1, **caractérisé en ce que** la désalcoolisation ou la séparation d'alcool (C) du perméat (24') désaromatisé, contenant de l'alcool, a lieu par distillation fractionnée.

3. Procédé selon l'une quelconque des revendications 1 ou 2, **caractérisé en ce que** l'obtention des substances aromatisantes sous forme d'une phase (36) de substances aromatisantes a lieu **en ce que**, pour l'adsorption (B) à froid, le perméat (24) contenant des substances aromatisantes et de l'alcool est guidé sur ou à travers un adsorbant (30) adsorbant les substances aromatisantes, en particulier une résine ou un mélange de différentes résines, et les substances aromatisantes sont récupérées de l'adsorbant (30) dans un procédé de récupération (13'), en particulier une récupération à la vapeur, sous forme de la phase (36) de substances aromatisantes.

4. Procédé selon l'une quelconque des revendications précédentes, **caractérisé en ce que** l'adsorbant (30) ou, selon le cas, sa composition est choisi(e) en fonction des substances aromatisantes à adsorber.

5. Procédé selon l'une quelconque des revendications précédentes, **caractérisé en ce que** la perméation (A) non thermique est réalisée à l'aide d'une membrane (20) de nanofiltration.

6. Procédé selon l'une quelconque des revendications précédentes, **caractérisé en ce que** la membrane (20) de nanofiltration est choisie en fonction de la composition du produit de départ (10) de boisson qui doit être désalcoolisé.

7. Procédé selon l'une quelconque des revendications précédentes, **caractérisé en ce que** la perméation (A) non thermique est réalisée, en fonction de la nature de la membrane de nanofiltration et de la composition souhaitée du perméat (24) et du retentat (22), dans une plage de pression de 10 bars à 50 bars ou dans une plage de pression de 20 bars à 40 bars.

8. Procédé selon l'une quelconque des revendications précédentes, **caractérisé en ce que** la perméation (A) non thermique est réalisée à une température dans la plage de 0°C à 50°C, en particulier de 18°C à 29° ou, selon le cas, de 22°C à 26°C, encore mieux à 25°C ± 1°C.

9. Procédé selon l'une quelconque des revendications précédentes, **caractérisé en ce que**, lors de la perméation (A) non thermique, le retentat (22) ou le produit de départ (10) de boisson est alimenté plusieurs fois, en circulation, sur une membrane (20) de nanofiltration via une conduite (12) d'alimentation, éliminé de celle-ci via une sortie (17) de recirculation et de nouveau alimenté sur celle-ci.

10. Procédé selon l'une quelconque des revendications précédentes, **caractérisé en ce que** la phase aqueuse (24") de perméat est utilisée comme constituant de formulation pour la reconstruction de la boisson (60) à teneur réduite en alcool pendant le mélange (D) et/ou est recyclée comme diluant dans le procédé (A) de perméation et en particulier pour la dilution d'un retentat/produit de départ de boisson en circulation lorsque le procédé (A) selon la revendication 10 se déroule ; et/ou est utilisée dans le procédé (B') de récupération, en particulier lorsque de la vapeur (36) pure alimentaire est nécessaire pour le procédé (B') de récupération en vue de la production de celle-ci.

11. Procédé selon l'une quelconque des revendications précédentes, **caractérisé en ce que**, pour la correction du goût, la boisson (60) à teneur réduite en alcool est additionnée, pendant le mélange (D), d'additifs appropriés, admis de concentrats de jus de fruits et/ou de jus de fruits et/ou d'acide carbonique et/ou de clarifiants admis pour le vin.

12. Procédé selon l'une quelconque des revendications précédentes, **caractérisé en ce que** le procédé est réalisé sous forme de procédé par lots.

13. Procédé selon l'une quelconque des revendications précédentes, **caractérisé en ce que** des étapes de procédé déterminées du procédé sont réalisées sous forme de procédé par lots et d'autres étapes de procédé sont réalisées de manière continue.

14. Installation pour la production d'une boisson (60) désalcoolisée à partir d'un produit de départ (10) de boisson contenant de l'alcool présentant
- un module (2) de perméation pour séparer le produit de départ (10) de boisson contenant de l'alcool en un perméat (24) contenant de l'alcool et des substances aromatisantes et en un retentat (22) contenant des substances aromatisantes et pratiquement sans alcool
- un module (4) pour désalcooliser (C) le perméat (24) contenant de l'alcool et des substances aromatisantes
- un module (5) de mélange pour mélanger le retentat (22) et le perméat désalcoolisé, **caractérisée en ce que**
- pour obtenir une phase (36) de substances aromatisantes à partir du perméat (24) contenant de l'alcool et des substances aromatisantes, un adsorbant (3) de substances aromatisantes est disposé fonctionnellement entre le module (2) de perméation et le module (4) pour la désalcoolisation et cet adsorbant (3) de substances aromatisantes présente une autre liaison fonctionnelle pour le guidage ultérieur de la phase (36) de substances aromatisantes vers le module (5) de mélange, de manière telle que la phase (36) de substances aromatisantes peut y être rassemblée avec la phase aqueuse (24") de perméat désalcoolisé, désaromatisée, provenant du module (4) pour la désalcoolisation (C) et avec le retentat (22) provenant du module (2) de perméation.

15. Installation selon la revendication 14, **caractérisée en ce que** l'adsorbant (3) pour l'adsorption des substances aromatisantes présente des adsorbants (30), en particulier dans des cartouches (31, 31') pouvant être traversées par un fluide, et est relié fonctionnellement avec un module (5') de récupération de manière telle que les substances aromatisantes peuvent être récupérées de l'adsorbant (30), et ce de préférence au moyen de vapeur (35) produite dans un générateur (34) de vapeur, et peuvent être guidées plus loin vers le module (5) de mélange sous forme de la phase (36) de substances aromatisantes ainsi obtenue.
